# EUROPEAN PATENT APPLICATION

(11) **EP 0 539 345 A1**
(43) Date of publication of application: **28.04.1993**
(21) Application number: 92870171.3
(22) Date of filing: 20.10.1992
(51) Int. Cl.: C07F 9/38

(54) **Process to prepare N-(2-hydroxyalkyl)-N-phosphonomethylglycine**

(30) Priority: 21.10.1991 US 779660
(71) Applicant: MONSANTO COMPANY, St. Louis Missouri 63167 (US)
(72) Inventor: Fields, Donald Lee, Jr., Akron, Ohio 44333 (US)
(74) Representative: Bosch, Henry

(57) **Abstract**

An efficient process is disclosed for the preparation of N-(2-hydroxyalkyl)-N-phosphonomethylglycine represented by the formula 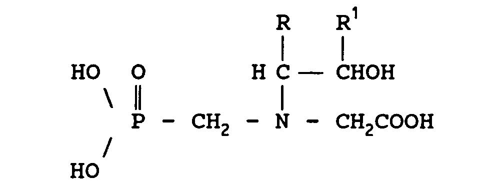
which comprises heating, preferably to reflux, an aqueous solution of glyoxal and N-(2-hydroxyalkyl)aminomethylphosphonic acid represented by the formula 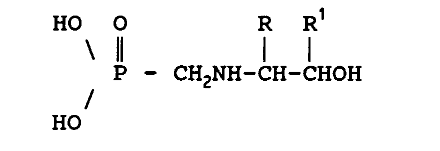
wherein R and R¹ are individually hydrogen, an alkyl having 1 to 4 carbon atoms, or aryl. Preferably both R and R¹ are hydrogen.

## Description

### Background of the Invention

This invention relates to a process to prepare N-substituted aminomethylphosphonic acids, and more particularly, to a process for the preparation of N-(2-hydroxyalkyl)-N-phosphonomethylglycine.

U.S. Patent 4,094,928 to Gaertner discloses the preparation of carboxyaldiminomethanephosphonates by reacting aminomethylphosphonic acid with glyoxal or a derivative thereof to form carbonylaldiminiomethanephosphonates, which then can be converted to N-phosphonomethylglycine by the procedures detailed in the patent.

U.S. Patent 4,810,426 to Fields, Jr. et al. describes a process wherein 2-oxazolidone is reacted with paraformaldehyde, and then with phosphorus trihalide to form N-phosphonomethyl-2-oxazolidone. This latter product is then hydrolyzed to form N-phosphonomethylethanolamine and a cyclic internal ester, which is then transformed into N-phosphonomethylglycine by caustic oxidation.

US Patent 4,486,358 to Moser discloses a process for producing N-phosphonomethylglycine by reacting aminomethanephosphonic acid with glyoxal in the presence of sulfur dioxide. The yields varied from about 45% to about 75%.

US Patent 4,684,483 to Richard et al. discloses a process which comprises reacting glyoxal in a polar solvent medium with a source of sulfur dioxide and a primary amine to produce a N-substituted amino acid, which is then contacted with formaldehyde and phosphorus acid in a strongly acid system to produce an N-alkyl-N-phosphonomethylglycine. There is no disclosure, however, for the preparation of N-(2-hydroxyalkyl)-N-phosphonomethylglycine.

US Patent 4,602,106 to Blanc discloses a process for producing hydroxyalkylaminoacetic acids by reacting glyoxal hot with a secondary hydroxylated amine. The hydroxyalkylaminoacetic acids have complexing properties. There is no disclosure, however, for the preparation of N-(2-hydroxyalkyl)-N-phosphonomethylglycine which is useful as a chemical intermediate.

The N-(2-hydroxyalkyl)-N-phosphonomethylglycine, which are prepared by the process of the present invention, are known to those skilled in the art. For example, in U.S. Patent 3,835,000 N-(2-hydroxyethyl)-N-phosphonomethylglycine is identified by formula as a starting material in an electrochemical process, and a general method for preparing such starting materials is disclosed in Column 4.

U.S. Patent 4,047,927, U.S. Patent 4,063,922 and U.S. Patent 4,119,430 disclose certain N-(2-hydroxyalkyl) derivatives of N-phosphonomethylglycine, prepared by reacting N-phosphonomethylglycine salts with a suitable epoxide, such as ethylene oxide. The derivatives are useful as herbicides and to increase the sucrose content of sugarcane plants. U.S. Patent 4,105,432 disclose that lactones prepared from such N-(2-hydroxyalkyl) derivatives of N-phosphonomethylglycine are useful as post-emergent herbicides.

Although N-(2-hydroxyalkyl)-N-phosphonomethylglycine can be prepared by these and other teachings in the prior art, there is now provided a new and novel method for the preparation of N-(2-hydroxyalkyl)-N-phosphonomethyl-glycine in high yields under modest reaction conditions, and which does not require the use of catalysts.

### Summary of the Invention

These and other advantages are achieved by a process for the preparation of N-(2-hydroxyalkyl)-N-phosphonomethylglycine represented by the formula 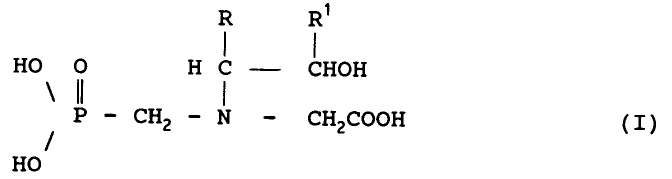
which comprises heating an aqueous solution of glyoxal and N-(2-hydroxyalkyl)aminomethylphosphonic acid represented by the formula 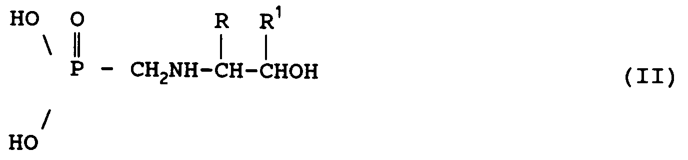
wherein R and R¹ are individually hydrogen, an alkyl having 1 to about 4 carbon atoms or aryl.

### Detailed Description of the Invention

The N-(2-hydroxyalkyl)-N-phosphonomethylglycines of the present invention are useful compounds as known in the art, and are useful intermediates for the preparation of other compounds, and especially for the preparation of N-phosphonomethylglycine. For example, the N-(2-hydroxyalkyl)-N-phosphonomethylglycine can be converted to N-phosphonomethylglycine by thermal dealkylation in accordance with the teachings of U.S. Patent 4,965,403. On the other hand, if the N-(2-hydroxyalkyl)-N-phosphonomethylglycine is N-(2-hydroxyethyl)-N-phosphonomethylglycine, the hydroxyethyl can be oxidized to the corresponding acid by techniques known to those skilled in the art to produce N-phosphonomethyliminodiacetic acid, which can then be dealkylated to provide N-phosphonomethylglycine by numerous methods known to those skilled in the art.

As is known to those skilled in the art, N-phosphonomethylglycine, known in the agricultural chemical art as glyphosate, is a highly effective and commercially important phytotoxicant useful in controlling the growth of germinating seeds, emerging seedlings, maturing and established woody and herbaceous vegetation and aquatic plants. N-Phosphonomethylglycine and its salts are conveniently applied in an aqueous formulation as a postemergent phytotoxicant and are characterized by a broad spectrum of activity, i.e., the control growth of a wide variety of plants.

In the process of the present invention, N-(2-hydroxyalkyl)-N-phosphonomethylglycine is readily prepared by heating an aqueous solution of glyoxal and N-hydroxyalkylaminomethylphosphonic acid in a one step reaction. The reaction is usually complete in about one hour, and satisfactory results are achieved without the use of a catalyst.

The temperature for the process of the present invention can vary within relatively wide ranges. At temperatures below about 60°C, the reaction is somewhat sluggish. Hence, it is preferred to heat the mixture of N-(2-hydroxyalkyl)aminomethylphosphonic acid and glyoxal to a temperature higher than 60°C, and preferably to a temperature between about 80°C and 100°C. It is even more preferable to heat the mixture to reflux, which is about 100°C. Higher temperatures can be used, but such higher temperatures above 100°C are not preferred since it requires the use of pressure and more sophisticated equipment.

The duration of the reaction depends upon the temperature, and the higher the temperature the quicker the reaction rate, and upon the particular hydroxyalkylaminomethylphosphonic acid used in the reaction. At 100°C the reaction is substantially complete in one hour. Completeness of the reaction can be readily determined by taking test samples regularly from the reaction medium and analyzing for the reactants and desired product.

The glyoxal for use in the process of the present invention is commercially available, usually in aqueous solutions between about 30 and about 55% by weight.

The mole ratio of glyoxal to N-(2-hydroxyalkyl)-aminomethylphosphonic acid can vary within wide limits, but it is preferred to use roughly equimolar amounts of glyoxal and hydroxyalkylaminomethylphosphonic acid. If desired, a slight excess of glyoxal may be used.

The N-(2-hydroxyalkyl)aminomethylphosphonic acid can be prepared by any number of techniques known to those skilled in the art, but many of these techniques provide poor yields. Accordingly, it is preferred to prepare this compound by the general teachings of U.S. 4,810,426 and U.S. 4,547,324. Broadly described, equimolar amounts of a substituted or unsubstituted 2-oxazolidone and p-formaldehyde in the presence of a carboxylic acid, preferably acetic acid, is heated to reflux. The solution is cooled to near room temperature and a phosphorus trihalide, preferably phosphorus trichloride, is added in equimolar amounts, and the mixture is again heated to reflux to provide an intermediate compound represented by the following formula 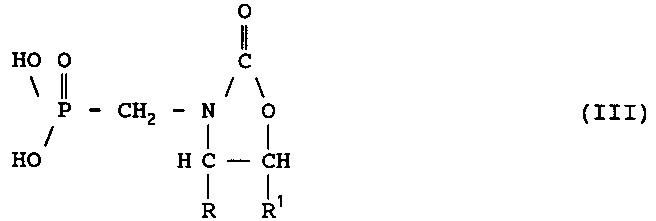
wherein R and R¹ are as defined above. Thereafter, the intermediate compound is hydrolyzed with a strong acid, e.g., sulfuric acid, or a strong base, e.g., sodium hydroxide, to provide the N-(2-hydroxyalkyl)aminomethylphosphonic acid of Formula II.

The R and R¹ substituents in the formulas can each be hydrogen, methyl, ethyl, propyl, isopropyl, butyl, isobutyl and the like, or aryl, e.g., phenyl. Higher organic radicals may be used, but there is no advantage to using such higher groups in the process of the present invention. The use of 2-oxazolidone is preferred, i.e., when both R and R¹ are hydrogen, to provide N-(2-hydroxyethyl)aminomethylphosphonic acid, which is then reacted with glyoxal to produce N-(2-hydroxyethyl)-N-phosphonomethylglycine.

The invention is further illustrated by, but not limited to, the following examples.

### Example 1

Into a 50 milliliter round bottomed flash equipped with a reflux condenser was charged N-2-(hydroxyethyl)aminomethylphosphonic acid (3.88 g, 0.025 mol) and a 40% aqueous solution of glyoxal (3.63 g, 0.025 mol). The mixture was then heated to reflux for one hour. After cooling, the resulting brown oil was heated at 60°C to evaporate water and light organics to give an off-white solid mixed with a brown tar. The solid was dissolved in water (50 ml.) and purified by ion exchange chromatography using DOWEX 50x8-400 ion exchange resin using water as the eluent. Analysis showed the presence of N-(2-hydroxyethyl)-N-phosphonomethylglycine (5.0 g., 94% yield). ¹H NMR (D₂O) δ 4.39 (s, 2H), 3.99 (t, 2H), 3.65 (t, 2H), 3.54 (d, 2H). ³¹P NMR (H₂O) δ 7.239 (S).

Although the invention has been described in terms of specified embodiments which are set forth in considerable detail, it should be understood that this is by way of illustration only, and that alternative embodiments and operating techniques will become apparent to those skilled in the art in view of the disclosure. Accordingly, modifications can be made without departing from the spirit of the described invention.

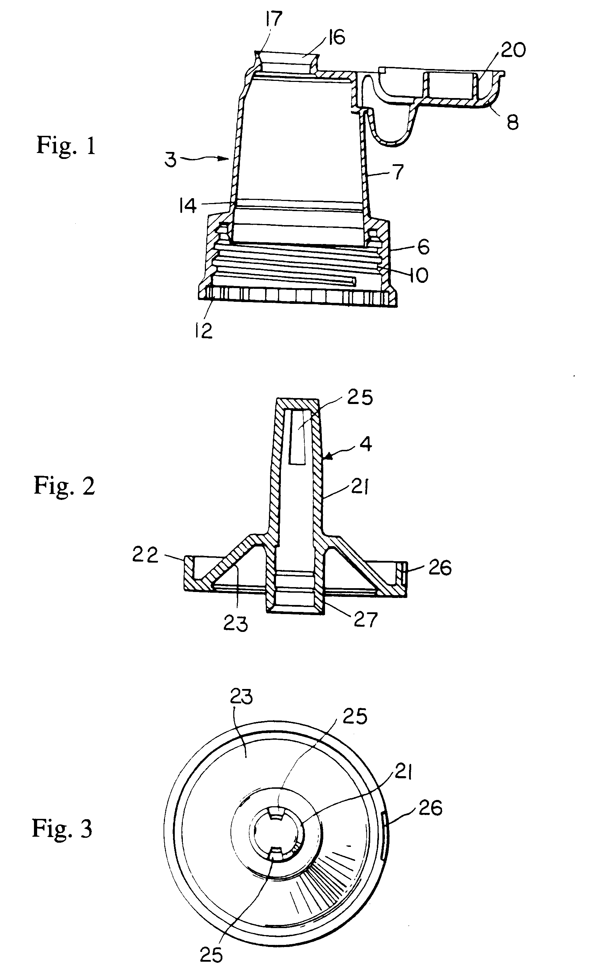

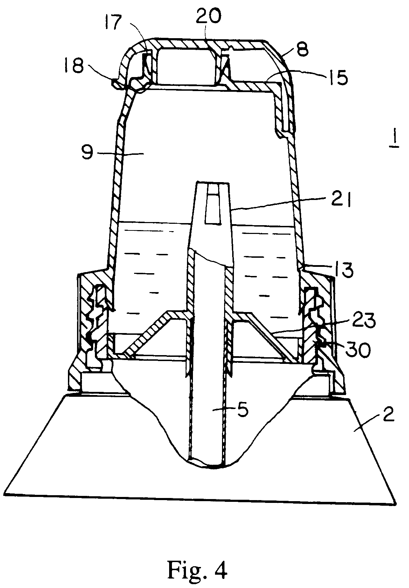

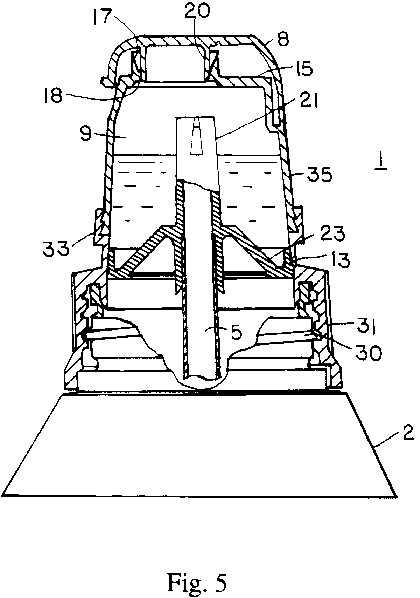

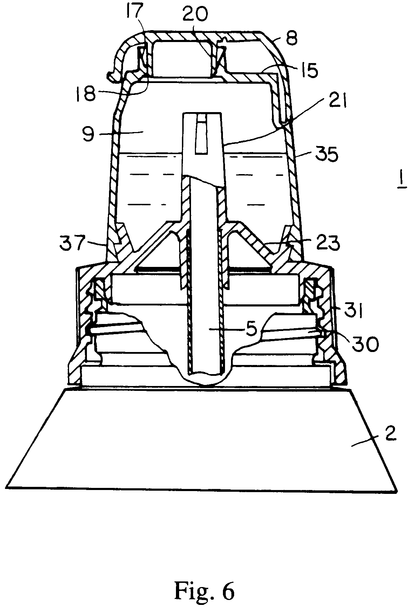

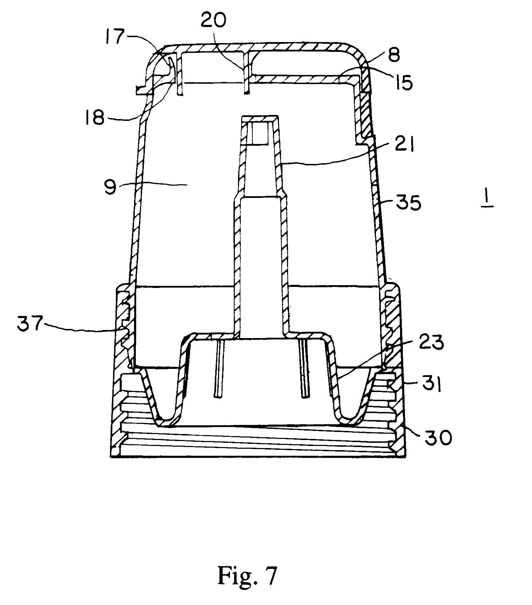

## Claims

1. A process for the preparation of N-hydroxyalkyl-N-phosphonomethylglycine represented by the formula 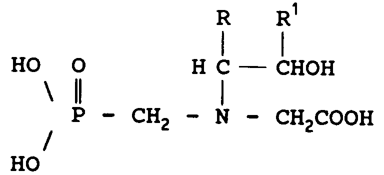 which comprises heating an aqueous solution of glyoxal and N-(2-hydroxyalkyl)aminomethylphosphonic acid represented by the formula 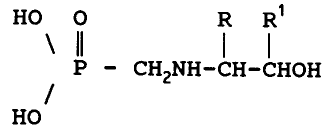 wherein R and R¹ are individually hydrogen, an alkyl having from 1 to about 4 carbon atoms, or aryl.

2. A process of Claim 1 wherein one of R or R¹ is hydrogen.

3. A process of Claim 1 wherein both R and R¹ are hydrogen.

4. A process of any of Claims 1-3 wherein the aqueous solution of glyoxal and N-(2-hydroxyalkyl) aminomethylphosphonic acid is heated to a temperature between about 60°C and about 100°C.

5. A process of any of Claims 1-3 wherein the aqueous solution of glyoxal and N-(2-hydroxyalkyl) aminomethylphosphonic acid is heated to a temperature between about 80°C and about 100°C.
